(19) **Europäisches Patentamt / European Patent Office / Office européen des brevets**

(11) **EP 4 703 035 A1**

(12) **EUROPEAN PATENT APPLICATION**
published in accordance with Art. 153(4) EPC

(43) Date of publication:
04.03.2026 Bulletin 2026/10

(21) Application number: 24796888.6

(22) Date of filing: 17.04.2024

(51) International Patent Classification (IPC):
*B01J 23/63* (2006.01)     *B01D 53/94* (2006.01)
*B01J 37/04* (2006.01)     *B01J 37/08* (2006.01)

(52) Cooperative Patent Classification (CPC):
B01D 53/94; B01J 23/63; B01J 37/04; B01J 37/08

(86) International application number:
PCT/JP2024/015274

(87) International publication number:
WO 2024/225135 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.04.2023 JP 2023071736

(71) Applicant: Kanadevia Corporation
Osaka-shi, Osaka 559-8559 (JP)

(72) Inventors:
• FUJIOKA, Koichi
Osaka-shi, Osaka 559-8559 (JP)

• NISHIDA, Yusuke
Osaka-shi, Osaka 559-8559 (JP)
• HINO, Naoe
Osaka-shi, Osaka 559-8559 (JP)
• HIKAZUDANI, Susumu
Osaka-shi, Osaka 559-8559 (JP)
• SHONO, Emi
Osaka-shi, Osaka 559-8559 (JP)

(74) Representative: Grünecker Patent- und
Rechtsanwälte
PartG mbB
Leopoldstraße 4
80802 München (DE)

(54) **METHANE OXIDATION CATALYST, PRODUCTION METHOD FOR METHANE OXIDATION CATALYST, AND METHANE OXIDATION METHOD**

(57) A methane oxidation catalyst is a catalyst for oxidizing methane, and contains a catalyst support containing a ceria-zirconia composite oxide, and an active metal supported on the catalyst support and containing Pd and Pt. Furthermore, the content ratio of ceria in the catalyst support is 5% by mass or more and less than 15% by mass.

EP 4 703 035 A1

**Description**

TECHNICAL FIELD

The present invention relates to a methane oxidation catalyst, a method of producing a methane oxidation catalyst, and a method of oxidizing methane.

BACKGROUND ART

Harmful substances (e.g., hydrocarbons, nitrogen oxides) contained in exhaust gas emitted, for example, from internal combustion engines cause air pollution. Specifically, the exhaust gas emitted from automobiles contains a large amount of propylene as a hydrocarbon. Exhaust gas emitted from internal combustion engines running with natural gas also contains unburned methane because a part of the methane contained in the natural gas is not burned. In order to decompose hydrocarbons contained in such exhaust gas, there has been a known technique in which a catalyst for decomposing hydrocarbons is disposed in an exhaust passage through which exhaust gas flows to decompose the hydrocarbons.

As such a hydrocarbon decomposition catalyst, a hydrocarbon decomposition catalyst in which an active metal is supported on a catalyst support made of a metal oxide containing 15 to 100% by mass of a rare earth oxide (e.g., ceria) has been proposed (see, for example, Patent Document 1).

The hydrocarbon decomposition catalyst of Patent Document 1 is highly active and can maintain its activity for a long period of time even under the condition of a high temperature (e.g., 800° C).

Citation List

Patent Document

Patent Document 1: Japanese Unexamined Patent Publication No. 2005-270882

On the other hand, as discussed above, exhaust gas from internal combustion engines running with natural gas contains unburned methane. Methane has a chemically stable structure and has a property of being not easily oxidized. Furthermore, exhaust gas emitted from internal combustion engines running with natural gas is emitted at a relatively low temperature. Therefore, among hydrocarbon decomposition catalysts, catalysts which oxidize methane are required to have a high methane decomposition ability under the condition of a relatively low temperature.

SUMMARY OF THE INVENTION

PROBLEM TO BE SOLVED BY THE INVENTION

However, the hydrocarbon decomposition catalyst of Patent Document 1 has a disadvantage that the hydrocarbon decomposition catalyst has a low methane decomposition ability under the condition of a relatively low temperature.

The present invention provides a methane oxidation catalyst having a high methane decomposition ability under the condition of a relatively low temperature, a method of producing the methane oxidation catalyst, and a method of oxidizing methane.

MEANS FOR SOLVING THE PROBLEM

The present invention [1] includes a methane oxidation catalyst for oxidizing methane, including: a catalyst support containing a ceria-zirconia composite oxide; and an active metal supported on the catalyst support and containing Pd and Pt, wherein a content ratio of ceria in the catalyst support is 5% by mass or more and less than 15% by mass.

The present invention [2] includes the methane oxidation catalyst described in the above-described [1], wherein a content ratio of the Pd in the active metal is 50% by mass or more.

The present invention [3] includes the methane oxidation catalyst described in the above-described [1], wherein a blending amount of the active metal with respect to 100 parts by mass of the catalyst support is 5 parts by mass or less.

The present invention [4] includes the methane oxidation catalyst described in the above-described [1], wherein the catalyst support further contains zirconia, wherein the zirconia contains a monoclinic zirconia phase, and wherein the ceria-zirconia composite oxide contains a tetragonal ceria-zirconia phase.

The present invention [5] includes a method of producing a methane oxidation catalyst, the method including: a first step of mixing a catalyst support raw material containing a ceria-zirconia composite oxide with a solution of an active

**EP 4 703 035 A1**

metal containing Pd and Pt to prepare a slurry; a second step of drying the slurry to obtain a powder; and a third step of calcining the powder at 400° C or more and 600°C or less to obtain a methane oxidation catalyst described in any one of the above-described [1] to [4], wherein in the first step, a content ratio of ceria in the catalyst support raw material is 5% by mass or more and less than 15% by mass.

The present invention [6] includes a method of oxidizing methane, the method including: an oxidation step of bringing methane into contact with a methane oxidation catalyst described in any one of the above-described [1] to [4] to oxidize the methane, wherein in the oxidation step, an oxidation temperature is 450°C or less.

EFFECTS OF THE INVENTION

The methane oxidation catalyst of the present invention includes a catalyst support containing a ceria-zirconia composite oxide and an active metal supported on the catalyst support and containing Pd and Pt, wherein the content ratio of ceria in the catalyst support is 5% by mass or more and less than 15% by mass. Therefore, the methane oxidation catalyst has a high methane decomposition ability under the condition of a relatively low temperature.

The method of producing a methane oxidation catalyst of the present invention includes a first step of mixing a catalyst support raw material containing a ceria-zirconia composite oxide with a solution of an active metal containing Pd and Pt to prepare a slurry, a second step of drying the slurry to obtain a powder, and a third step of calcining the powder at 400°C or more and 600°C or less to obtain a methane oxidation catalyst, wherein in the first step, the content ratio of ceria in the catalyst support is 5% by mass or more and less than 15% by mass. Therefore, the above-described methane oxidation catalyst can be efficiently produced.

The method of oxidizing methane of the present invention includes an oxidation step of bringing methane into contact with the above-described methane oxidation catalyst to oxidize the methane, and in the oxidation step, the oxidation temperature is 450°C or less. Therefore, methane can be efficiently oxidized under the condition of a relatively low temperature.

BRIEF DESCRIPTION OF THE DRAWINGS

FIG. 1 shows a graph of the X-ray diffraction (XRD) pattern of the catalyst support raw material used in each of Examples and Comparative Examples.
FIG. 2 shows a graph of the X-ray diffraction (XRD) pattern of the methane oxidation catalyst of each of Examples and Comparative Examples.

DESCRIPTION OF THE EMBODIMENTS

1. Methane Oxidation Catalyst

A methane oxidation catalyst is a catalyst that oxidizes methane ($CH_4$) in a methane-containing gas to decompose the methane into $CO_2$ and $H_2O$. Such a methane oxidation catalyst can be used, for example, for removing unburned methane contained in an exhaust gas as a methane-containing gas emitted from an LNG fuel vessel, and can also be used for removing methane contained in a methane-containing gas produced in a process such as a gas phase reaction in a chemical plant.

The methane oxidation catalyst includes a catalyst support containing a ceria-zirconia composite oxide and an active metal supported on the catalyst support and containing Pd and Pt.

<Catalyst Support>

The catalyst support supports an active metal to be described later.

The catalyst support contains a ceria-zirconia composite oxide. Furthermore, the catalyst support may contain another catalyst support (e.g., zirconia and a particle component to be described later) other than the ceria-zirconia composite oxide.

A ceria-zirconia composite oxide ($Ce_xZr_{1-x}O_2$) is, for example, a solid solution of ceria ($CeO_2$) and zirconia ($ZrO_2$). X is more than 0 and less than 1.

In other words, examples of the raw material of the ceria-zirconia composite oxide include ceria and zirconia.

In the raw material of the ceria-zirconia composite oxide, for example, the whole of the zirconia may form the ceria-zirconia composite oxide, or, for example, a part of the zirconia may form the ceria-zirconia composite oxide, and the rest of the zirconia may be solely present. In the raw material of the ceria-zirconia composite oxide, preferably, a part of the zirconia forms the ceria-zirconia composite oxide, and the rest of the zirconia is solely present.

In the raw material of the ceria-zirconia composite oxide, for example, the whole of the ceria may form the ceria-zirconia composite oxide, or, for example, a part of the ceria may form the ceria-zirconia composite oxide, and the rest of the ceria may be solely present. In the raw material of the ceria-zirconia composite oxide, preferably, the whole of the ceria forms the ceria-zirconia composite oxide.

That is, the catalyst support preferably contains zirconia and a ceria-zirconia composite oxide, and more preferably consists of zirconia and a ceria-zirconia composite oxide.

When zirconia is solely present, the zirconia contains, for example, a monoclinic zirconia (m-$ZrO_2$) phase, and the ceria-zirconia composite oxide contains, for example, a tetragonal ceria-zirconia (t-$Ce_XZr_{1-X}O_2$) phase.

That is, the catalyst support preferably contains both a monoclinic zirconia phase and a tetragonal ceria-zirconia phase. Specifically, the zirconia, which is contained in the catalyst support and does not form the ceria-zirconia composite oxide, solely forms a monoclinic zirconia phase, and the ceria-zirconia composite oxide forms a tetragonal ceria-zirconia phase.

When the catalyst support contains a monoclinic zirconia phase on which an active metal support site is more easily activated than on a tetragonal ceria-zirconia phase, the catalyst has an excellent methane decomposition ability. Furthermore, when the catalyst support contains a tetragonal ceria-zirconia phase, the surface acidity required for the methane oxidation reaction can be ensured, and the catalyst has a more excellent methane decomposition ability.

The content ratios to be described later of zirconia and ceria are content ratios of the sum of the ceria present solely, the zirconia present solely, and the ceria and zirconia forming a ceria-zirconia composite oxide in the catalyst support.

The content ratio of zirconia in the catalyst support is, for example, 50% by mass or more, preferably 70% by mass or more, more preferably 80% by mass or more, even more preferably 85% by mass or more, particularly preferably 89% by mass or more, most preferably 90% by mass or more, and, for example, less than 95% by mass, preferably 94% by mass or less, more preferably 93% by mass or less, even more preferably 92% by mass or less, and particularly preferably 91% by mass or less.

When the content ratio of zirconia in the catalyst support is within the above-described range, the zirconia can solely form a monoclinic zirconia phase.

The content ratio of ceria in the catalyst support is 5% by mass or more, preferably 6% by mass or more, more preferably 7% by mass or more, even more preferably 8% by mass or more, and particularly preferably 9% by mass or more. Furthermore, in the catalyst support, the content ratio of ceria is less than 15% by mass, preferably 14% by mass or less, more preferably 13% by mass or less, even more preferably 12% by mass or less, particularly preferably 11% by mass or less, and most preferably 10% by mass or less.

When the content ratio of ceria in the catalyst support is within the above-described range, it is possible to ensure the blending amount of zirconia for forming a monoclinic zirconia phase while forming a ceria-zirconia composite oxide. Consequently, the catalyst support can contain both a monoclinic zirconia phase and a tetragonal ceria-zirconia phase, and the catalyst has a high methane decomposition ability under the condition of a relatively low temperature.

The fact that the catalyst support contains a monoclinic zirconia (m-$ZrO_2$) phase and a tetragonal ceria-zirconia (t-$Ce_XZr_{1-X}O_2$) phase can be confirmed by measuring the X-ray diffraction (XRD) pattern. The details thereof are described in Examples below.

Described below are the positions (values of $2\theta$, where $\theta$ is the Bragg angle) of a diffraction peak of the monoclinic zirconia (m-$ZrO_2$) phase and a diffraction peak of the tetragonal ceria-zirconia (t-$Ce_XZr_{1-X}O_2$) phase. The position of the diffraction peak of the tetragonal ceria-zirconia (t-$Ce_XZr_{1-X}O_2$) phase is shifted depending on the composition of Ce, i.e., the value of X.

The position of the diffraction peak of a (-111) plane of the monoclinic zirconia (m-$ZrO_2$) phase is, for example, $28° \le 2\theta \le 29°$. The position of the diffraction peak of a phase (101) plane of the tetragonal ceria-zirconia (t-$Ce_XZr_{1-X}O_2$) is, for example, $28° \le 2\theta \le 31°$.

At the diffraction peak of the (101) plane of the tetragonal ceria-zirconia (t-$Ce_XZr_{1-X}O_2$) phase, the position of the diffraction peak of X=0 (the diffraction peak of a (111) plane of the t-$ZrO_2$ phase) is, for example, $30° \le 20 \le 31°$.

Furthermore, as described above, the catalyst support may contain a particle component as another catalyst support.

Examples of the particle component include silica, alumina, titania, and zeolite.

The particle components may be used alone or in combination of two or more.

<Active Metal>

The active metal is supported on the catalyst support.

Examples of the active metal include a state of a metal and a state of a metal oxide. From the viewpoint of catalytic activity, a state of a metal is preferable.

The active metal contains Pd and Pt.

Furthermore, the active metal may contain another active metal other than Pd and Pt. Examples of another active metal include Ni, Co, Mn, Fe, and Cu.

The active metal contains Pd and Pt, and is preferably Pd and Pt. That is, preferably the active metal does not contain another active metal other than Pd and Pt. When the active metal is Pd and Pt, the total amount described below of the active metal is the total amount of Pd and Pt.

In the active metal, the content ratio of Pd (= the content of Pd/the total amount of the active metal $\times$ 100) is, for example, 30% by mass or more, preferably 40% by mass or more, more preferably 50% by mass or more, even more preferably 70% by mass or more, particularly preferably 75% by mass or more, most preferably 80% by mass or more, and, for example, less than 100% by mass, preferably 95% by mass or less, more preferably 90% by mass or less, even more preferably 85% by mass or less.

When the content ratio of Pd in the active metal is within the above-described range, the methane oxidation catalyst has a high methane decomposition ability under the condition of a relatively low temperature.

In the active metal, the content ratio of Pt (= the content of Pt/the total amount of active metal $\times$ 100) is, for example, 1% by mass or more, preferably 5% by mass or more, more preferably 10% by mass or more, even more preferably 15% by mass or more, and, for example, 60% by mass or less, preferably 50% by mass or less, more preferably 40% by mass or less, even more preferably 30% by mass or less, particularly preferably 25% by mass or less, and most preferably 20% by mass or less.

When the content ratio of Pt in the active metal is within the above-described range, the methane oxidation catalyst has excellent production cost efficiency.

The blending amount of the active metal with respect to 100 parts by mass of the catalyst support is, for example, 1 part by mass or more, preferably 2 parts by mass or more, more preferably 3 parts by mass or more, even more preferably 4 parts by mass or more, and, for example, 10 parts by mass or less, preferably 8 parts by mass or less, more preferably 6 parts by mass or less, and even more preferably 5 parts by mass or less. The term "parts by mass" indicates the ratio of the blending amount of the active metal with respect to the blending amount of the catalyst support.

When the blending amount of the active metal with respect to 100 parts by mass of the catalyst support is within the above-described range, the methane oxidation catalyst has excellent production cost efficiency.

The blending amount of Pd with respect to 100 parts by mass of the catalyst support is, for example, 0.5 parts by mass or more, preferably 1 part by mass or more, more preferably 2 parts by mass or more, even more preferably 3 parts by mass or more, particularly preferably 4 parts by mass or more, and, for example, less than 10 parts by mass, preferably 8 parts by mass or less, more preferably 6 parts by mass or less, and even more preferably 5 parts by mass or less.

The blending amount of Pt with respect to 100 parts by mass of the catalyst support is, for example, 0.1 parts by mass or more, preferably 0.3 parts by mass or more, more preferably 0.5 parts by mass or more, even more preferably 0.8 parts by mass or more, and, for example, less than 5 parts by mass, preferably 3 parts by mass or less, more preferably 2 parts by mass or less, and even more preferably 1 part by mass or less.

<Additive>

An additive may be added to the methane oxidation catalyst, if necessary.

The additive is not particularly limited as long as it is an additive commonly used in a methane oxidation catalyst, and examples thereof include a diluting component and a binder.

The diluting component is a substance which is inert to a methane oxidation reaction. Adding the diluting component to the methane oxidation catalyst makes temperature control easy.

Examples of the diluting component include alumina (e.g., $\alpha$-alumina, $\theta$-alumina, $\gamma$-alumina), and titania (e.g., rutile-type titania, anatase-type titania)

The diluting components may be used alone or in combination of two or more thereof.

The binder is a binding component for binding the methane oxidation catalysts together, for example, when the methane oxidation catalyst is used in a fluidized bed-type reaction apparatus.

Examples of the binder include silicate, titanate, and aluminate.

The binders may be used alone or in combination of two or more thereof.

The addition ratios of the diluting component and the binder are arbitrarily selected depending on, for example, the application of the methane oxidation catalyst.

2. Method of Producing Methane Oxidation Catalyst

Next, a method of producing a methane oxidation catalyst of the present invention is described.

The method of producing a methane oxidation catalyst includes a first step of mixing a catalyst support raw material containing a ceria-zirconia composite oxide with a solution of an active metal containing Pd and Pt to prepare a slurry, a second step of drying the slurry to obtain a powder, and a third step of calcining the powder at 400°C or more and 600°C or less to obtain a methane oxidation catalyst.

[First step]

In the first step, a catalyst support raw material containing a ceria-zirconia composite oxide and a solution of an active metal containing Pd and Pt are mixed together to prepare a slurry. Specifically, a slurry is obtained by suspending a powdery catalyst support raw material containing a ceria-zirconia composite oxide in a solution of an active metal containing Pd and Pt (active metal-containing solution) and stirring the suspension.

The catalyst support raw material is not particularly limited as long as it is a raw material for forming the above-described catalyst support. The catalyst support raw material includes a ceria-zirconia composite oxide, and preferably includes zirconia and a ceria-zirconia composite oxide, and more preferably consists of zirconia and a ceria-zirconia composite oxide.

The content ratio of ceria in the catalyst support raw material is not particularly limited as long as the above-described content ratio of ceria in the catalyst support is satisfied. In other words, the content ratio of ceria in the catalyst support raw material is 5% by mass or more, preferably 6% by mass or more, more preferably 7% by mass or more, even more preferably 8% by mass or more, and particularly preferably 9% by mass or more. Furthermore, the content ratio of ceria in the catalyst support raw material is less than 15% by mass, preferably 14% by mass or less, more preferably 13% by mass or less, even more preferably 12% by mass or less, particularly preferably 11% by mass or less, and most preferably 10% by mass or less.

The active metal-containing solution is, for example, a solution containing a salt of an active metal and a solvent.

Examples of the salt of an active metal include a nitrate salt of an active metal, a chloride of an active metal, and an acetate salt of an active metal, and preferably a nitrate salt of an active metal is used.

The active metal contains Pd and Pt. Furthermore, the active metal may include an active metal other than Pd and Pt.

That is, examples of the salt of an active metal include a palladium salt and a platinum salt. Specifically, examples of the palladium salt include palladium nitrate, palladium chloride, and palladium acetate, and preferably palladium nitrate is used. Furthermore, examples of the platinum salt include tetraammine platinum (II) nitrate, platinum nitrate, and platinum chloride, and preferably tetraammine platinum (II) nitrate and platinum nitrate are used.

The solvent is not particularly limited as long as it is usually used as an active metal-containing solution, and examples thereof include ion-exchanged water and ultrapure water, and preferably ion-exchanged water is used.

The active metal-containing solution may be prepared, for example, by mixing each of active metal solutions, or may be prepared by adding each of the salts of active metals to one solvent. From the viewpoint of productivity, the active metal-containing solution is prepared by mixing each of active metal solutions. Specifically, the active metal-containing solution can be prepared by mixing a palladium (II) nitrate solution, a tetraammineplatinum (II) nitrate solution, and ion-exchanged water.

To the above-described active metal-containing solution, a catalyst support raw material is added and stirred, thereby producing a slurry.

The stirring temperature is, for example, 5°C or more, and, for example, 35°C or less.

The stirring time can be appropriately set depending on the amount to be prepared, and is, for example, 15 hours or more, and, for example, 21 hours or less.

In this manner, a slurry containing an active metal and a catalyst support is obtained.

[Second Step]

In the second step, the slurry obtained in the first step is dried to obtain a powder.

The drying temperature is, for example, 80°C or more, preferably 100°C or more, and, for example, 150°C or less, preferably 130°C or less.

The drying time can be appropriately set to the time required for drying the slurry at the above-described drying temperature, and is, for example, 1 hour or more, preferably 3 hours or more, and, for example, 9 hours or less, preferably 7 hours or less.

[Third Step]

In the third step, the powder obtained in the second step is calcined at 400°C or more and 600°C or less to obtain a methane oxidation catalyst.

The calcination method is not particularly limited, and a known method can be used as long as the desired catalyst can be obtained.

The calcination temperature is 400°C or more, preferably 450°C or more, more preferably 480°C or more. Furthermore, the calcination temperature is 600°C or less, preferably 550°C or less, more preferably 520°C or less.

The calcination time is, for example, 5 hours or more, preferably 7 hours or more, and, for example, 13 hours or less, preferably 11 hours or less.

The resulting methane oxidation catalyst may be pulverized. Examples of the pulverization method includes compression pulverization. Furthermore, the pulverized methane oxidation catalyst may be sieved to separate the methane oxidation catalyst having a desired size. Furthermore, the methane oxidation catalyst before or after pulverization may be compression-molded into a predetermined shape.

Examples of the shape of the methane oxidation catalyst include a spherical shape, a pellet shape, and a tablet (pill) shape.

Although the above-described second step and third step show a method of producing a methane oxidation catalyst having a shape such as a spherical shape, a pellet shape, or a tablet (pill) shape, the shape of the methane oxidation catalyst may be, for example, a plate shape or a honeycomb shape (monolithic body).

A plate-shaped methane oxidation catalyst can be obtained, for example, by applying or impregnating the slurry obtained in the above-described first step on/in an inorganic fiber sheet, and then drying and calcinating the sheet.

Examples of the inorganic fiber sheet include a glass fiber sheet and a ceramic fiber sheet.

Examples of the conditions for the drying and the conditions for the calcination include the conditions described in the above-described second step and third step.

The honeycomb-shaped (monolith body) methane oxidation catalyst can be obtained, for example, by coating the methane oxidation catalyst onto a substrate material of a honeycomb structure.

Examples of the substrate material of the honeycomb structure include an inorganic fiber sheet (e.g., a glass fiber sheet and a ceramic fiber sheet), cordierite, silicon carbide, mullite, alumina, zirconia, titania, titanium phosphate, aluminum titanate, betalite, spodumene, aluminosilicate, and magnesium silicate.

Examples of a method of the coating onto a glass fiber sheet which is a substrate material of a honeycomb structure include the methods described in Patent No. 5909436 and Patent No. 6228727.

Specifically, the slurry obtained in the above-described first step is applied to a glass fiber sheet, and then the slurry-coated glass fiber sheet is molded with a corrugation metal mold and a clamping jig, and the obtained slurry-coated glass fiber sheet having a corrugated plate-shape is dried and released from the mold. After the drying, the corrugated plate-shaped slurry-coated glass fiber sheet is calcinated to obtain a methane oxidation catalyst of the corrugated plate-shaped glass fiber sheet.

On the other hand, the slurry obtained in the above-described first step is applied to a glass fiber sheet, and a flat plate-shaped slurry-coated glass fiber sheet which is not moled is dried. After the drying, the flat plate-shaped slurry-coated glass fiber sheet is calcinated to obtain a methane oxidation catalyst of a flat plate-shaped glass fiber sheet.

The drying temperature of the corrugated plate-shaped slurry-coated glass fiber sheet and the flat plate-shaped slurry-coated glass fiber sheet is, for example, 100°C or more, and, for example, 200°C or less, and the drying time is, for example, 1 hour or more, and, for example, 2 hours or less.

The calcination temperature of the corrugated plate-shaped slurry-coated glass fiber sheet and the flat plate-shaped slurry-coated glass fiber sheet is, for example, 300°C or more, and also, for example, 550°C or less, and the calcination time is, for example, 1 hour or more, and also, for example, 4 hours or less.

Then, the methane oxidation catalyst of the corrugated plate-shaped glass fiber sheet and the methane oxidation catalyst of the flat plate-shaped fiber sheet are laminated to obtain a methane oxidation catalyst having a cross-sectional network structure (honeycomb shape).

As described above, a methane oxidation catalyst can be produced.

3. Method of Oxidizing Methane (Method of Using Methane Oxidation Catalyst)

Next, a method of oxidizing methane of the present invention will be described.

The method of oxidizing methane includes an oxidation step of bringing methane into contact with the above-described methane oxidation catalyst to oxidize the methane, and the oxidation temperature is 450°C or less in the oxidation step.

Specifically, as the method of oxidizing methane, the above-described methane oxidation catalyst is filled in a reactor (e.g., a fixed-bed reactor), a methane-containing gas is supplied from the reactor feed port, and thus the methane is brought into contact with the methane oxidation catalyst, thereby oxidizing the methane into $CO_2$ and $H_2O$. Thereafter, the $CO_2$ and $H_2O$ are discharged from the reactor discharge port.

The filling amount and volume of the methane oxidation catalyst can be appropriately adjusted depending on the purpose.

The methane oxidation catalyst can be used, for example, for removing the methane in an exhaust gas as a methane-containing gas emitted from an LNG fuel vessel. When used in such a purpose, the filling amount of the methane oxidation catalyst is, for example, 0.5 kg or more, preferably 5 kg or more, more preferably 10 kg or more, even more preferably 50 kg or more, particularly preferably 100 kg or more, and most preferably 150 kg or more. The volume of the methane oxidation catalyst is, for example, 0.003 $m^3$ or more, preferably 0.01 $m^3$ or more, more preferably 0.1 $m^3$ or more, even more preferably 0.5 $m^3$ or more, particularly preferably 0.8 $m^3$ or more, most preferably 1.0 $m^3$ or more.

When the filling amount and volume of the methane oxidation catalyst are the above-described lower limits or more, the methane oxidation catalyst can be used for removing the methane in an exhaust gas as a methane-containing gas emitted from an LNG fuel vessel.

Differently from three-way catalysts used in automotive exhaust gas treatments, the methane oxidation catalyst contains Pd and Pt in specific ratios in the active metal. In other words, even when the methane oxidation catalyst contains another active metal (e.g., Rh in the case of a three-way catalyst), the content thereof is low, and the methane oxidation catalyst can be produced relatively inexpensively. Therefore, even when the methane oxidation catalyst is used for removing the methane in an exhaust gas as a methane-containing gas emitted from an LNG fuel vessel (when the filling amount and volume of the methane oxidation catalyst are large), the cost of the raw material can be suppressed.

The methane-containing gas supplied to the reactor includes, for example, $CH_4$, $O_2$, and $H_2O$. The gas may also include another hydrocarbon and $N_2$.

The concentration of $CH_4$ in the methane-containing gas is not particularly limited, and is, for example, 100 ppmv-dry or more, preferably 300 ppmv-dry or more, more preferably 500 ppmv-dry or more, even more preferably 800 ppmv-dry or more, and also, for example, 100000 ppmv-dry or less, preferably 50000 ppmv-dry or less, more preferably 30000 ppmv-dry or less, even more preferably 10000 ppmv-dry or less.

The concentration of $O_2$ in the methane-containing gas is, for example, 3% by volume, 5% by volume or more, more preferably 8% by volume or more, even more preferably 10% by volume or more, and, for example, 30% by volume or less, preferably 25% by volume or less, more preferably 20% by volume, and even more preferably 15% by volume or less.

The concentration of $H_2O$ in the methane-containing gas is, for example, 1% by volume or more, preferably 3% by volume or more, more preferably 5% by volume or more, and, for example, 20% by volume or less, preferably 15% by volume or less, more preferably 12% by volume or less, and even more preferably 10% by volume or less.

The flow rate of the methane-containing gas is not particularly limited, and is, for example, 0.1 NL/min or more, preferably 0.3 NL/min or more, more preferably 0.5 NL/min or more, and, for example, 10 NL/min or less, preferably 8 NL/min or less, more preferably 5 NL/min or less.

The gas hourly space velocity (GHSV) of the methane-containing gas is, for example, 10,000 $h^{-1}$ or more, preferably 20,000 $h^{-1}$ or more, more preferably 30,000 $h^{-1}$ or more, and, for example, 100,000 $h^{-1}$ or less, preferably 90,000 $h^{-1}$ or less, more preferably 80,000 $h^{-1}$ or less.

The gas hourly space velocity (GHSV) can be calculated according to the following formula.

$$\text{Gas hourly space velocity (GHSV)} = \text{Flow rate of gas } (Nm^3/h)/\text{Catalyst volume } (m^3)$$

In the oxidation step of bringing methane into contact with the methane oxidation catalyst to oxidize the methane, the oxidation temperature is, for example, 200°C or more, preferably 250°C or more, more preferably 300°C or more, even more preferably 350°C or more, and, for example, 700°C or less, preferably 600°C or less, more preferably 500°C or less, even more preferably 450°C or less, particularly preferably 400°C or less.

In other words, the above-described methane oxidation catalyst can oxidize methane even under the condition of a relatively low temperature as described above.

Furthermore, the reaction rate constant k of the methane oxidation catalyst in the methane oxidation reaction at 350°C is, for example, 7,500 $h^{-1}$ or more, preferably 10,000 $h^{-1}$ or more, more preferably 12,500 $h^{-1}$ or more, even more preferably 50,000 $h^{-1}$ or more, particularly preferably 65,000 $h^{-1}$ or more, most preferably 72,000 $h^{-1}$ or more. The larger the reaction rate constant k is, the higher the methane decomposition ability is.

The reaction rate constant k of the methane oxidation catalyst in the methane oxidation reaction at 350°C can be calculated in accordance with the conditions and methods of the methane oxidation catalyst performance evaluations described in Examples. Specifically, at temperatures of 6 points, the methane oxidation rate (%) is measured, and the reaction rate constant k at each temperature is determined according to the following formula (1). Then, based on the reaction rate constant k at each temperature, the Arrhenius equation of the methane oxidation reaction is identified by the Arrhenius plot method, and the reaction rate constant k at 350°C can be determined.

$$k = -GHSV \times \ln(1\text{-methane oxidation rate } (\%)/100)$$

Methane oxidation rate (%) = (Methane concentration at the reactor feed port - Methane concentration at the reactor discharge port)/(Methane concentration at the reactor feed port)$\times$100

The above-described methane concentration at the reactor feed port is the concentration of the methane supplied to the reactor filled with the methane oxidation catalyst (the concentration of the methane before the contact with the methane oxidation catalyst), and the methane concentration at the reactor discharge port is the concentration of the methane discharged from the reactor filled with the methane oxidation catalyst (the concentration of the methane after the contact with the methane oxidation catalyst).

The methane oxidation rate (%) at 350°C in the methane oxidation catalyst is, for example, 10% or more, preferably 15% or more, more preferably 20% or more, even more preferably 50% or more, particularly preferably 60% or more, and most preferably 70% or more.

The methane oxidation rate (%) at 375°C in the methane oxidation catalyst is, for example, 20% or more, preferably 30% or more, more preferably 40% or more, even more preferably 80% or more, particularly preferably 85% or more, and most preferably 90% or more.

The methane oxidation rate (%) at 400°C in the methane oxidation catalyst is, for example, 40% or more, preferably 60% or more, more preferably 70% or more, even more preferably 80% or more, particularly preferably 90% or more, and most preferably 95% or more.

The methane oxidation rate (%) at each temperature is calculated in accordance with the conditions and the methods of the methane oxidation catalyst performance evaluations described in Examples. Specifically, the methane oxidation rate (%) is calculated using the above-described formula (1) and the reaction rate constant k at each temperature calculated by the above-described method.

<Operations and Effects>

The methane oxidation catalyst of the present invention includes a catalyst support containing a ceria-zirconia composite oxide and an active metal supported on the catalyst support and containing Pd and Pt, wherein the content ratio of ceria in the catalyst support is 5% by mass or more and less than 15% by mass. Therefore, the methane oxidation catalyst has a high methane decomposition ability under the condition of a relatively low temperature.

The method of producing a methane oxidation catalyst of the present invention can efficiently produce the above-described methane oxidation catalyst.

The method of oxidizing methane of the present invention includes an oxidation step of bringing methane into contact with the above-described methane oxidation catalyst to oxidize the methane, and in the oxidation step, the oxidation temperature is 450°C or less. In other words, the method can efficiently oxidize methane under the condition of a relatively low temperature. Examples

In reference to Examples and Comparative Examples below, the present invention is more specifically described. The present invention is however not limited by Examples and Comparative Examples in any manner. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

Example 1

<Preparation of Methane Oxidation Catalyst>

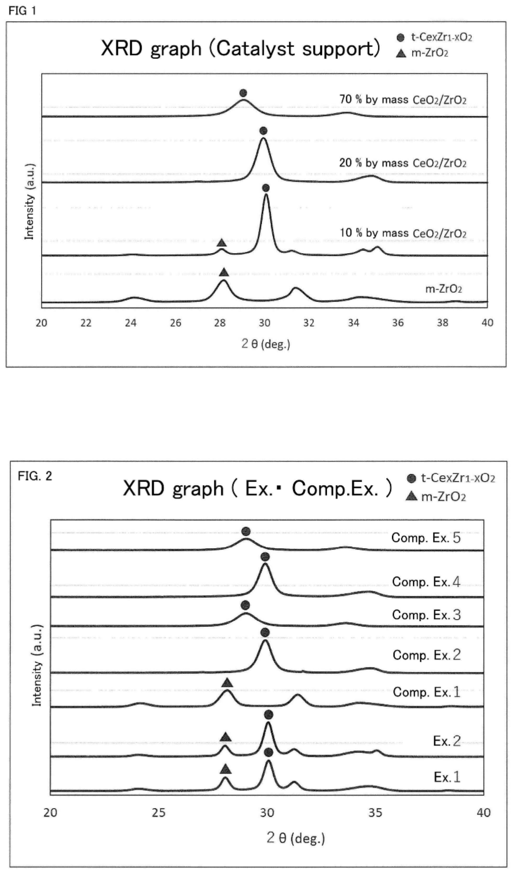

A palladium (II) nitrate solution (trade name: low chlorine nitrate Pd solution, manufactured by TANAKA PRECIOUS METAL GROUP Co., Ltd.), a tetraammine platinum (II) nitrate salt solution (trade name: Tetraammineplatinum (II) nitrate salt solution, manufactured by TANAKA PRECIOUS METAL GROUP Co., Ltd.), and ion-exchanged water were mixed together so that the mass ratio of palladium (Pd) to platinum (Pt) in an aqueous solution is 1:1, thereby obtaining an aqueous solution (metal solution preparation step). Then, 10% by mass $CeO_2/ZrO_2$ powder (trade name: Z-3284, manufactured by DAIICHI KIGENSO KAGAKU KOGYO CO., LTD.) was added to and mixed with the prepared aqueous solution to prepare a slurry (slurry preparation process). The blending amount of the 10% by mass $CeO_2/ZrO_2$ in the slurry with respect to 2 parts by mass of the total amount of the active metal (Pd and Pt) is 100 parts by mass. The above-described 10% by mass $CeO_2/ZrO_2$ contains 10% by mass of Seria and 90% by mass of zirconia, and also contains a monoclinic zirconia phase and a tetragonal ceria-zirconia phase, as shown in the X-ray diffraction results in FIG. 1. That is, the 10% by mass $CeO_2/ZrO_2$ contains zirconia solely and a ceria-zirconia composite oxide.

Then, the prepared slurry was stirred at room temperature for 16 hours, and then dried at 110°C to obtain a powder. This powder was calcined at 500°C for 9 hours to obtain a methane oxidation catalyst. The catalyst was subjected to compression pulverization, and sieved to separate a powder (methane oxidation catalyst) having a particle size of 16 to 31 mesh (0.5 to 1.00 mm). As described above, a methane oxidation catalyst powder of Example 1 (catalyst support: 10% by mass $CeO_2/ZrO_2$, active metal: 1.0 part by mass Pd+1.0 part by mass Pt) was prepared.

Example 2

Except that in the metal solution preparation step, a palladium (II) nitrate solution (trade name: low chlorine nitrate Pd solution, manufactured by TANAKA PRECIOUS METAL GROUP Co., Ltd.), a tetraammine platinum (II) nitrate salt solution (trade name: Tetraammineplatinum (II) nitrate salt solution, manufactured by TANAKA PRECIOUS METAL GROUP Co., Ltd.), and ion-exchanged water were mixed so that the mass ratio of palladium (Pd) to platinum (Pt) in an aqueous solution is 1:4, a methane oxidation decomposition catalyst (catalyst support: 10% by mass $CeO_2/ZrO_2$, active metal: 4.0 parts by mass Pd+1.0 part by mass Pt) of Example 2 was obtained in the same manner as in Example 1.

Comparative Example 1

Except that in the slurry preparation step, a $ZrO_2$ powder (trade name: RC-100 zirconium oxide, manufactured by DAIICHI KIGENSO KAGAKU KOGYO CO., LTD.) was added to and mixed with the aqueous solution prepared in the metal solution preparation step to prepare a slurry, a methane oxidation decomposition catalyst (catalyst support: $ZrO_2$, active metal: 1.0 part by mass Pd+1.0 part by mass Pt) of Comparative Example 1 was obtained in the same manner as in Example 1.

Comparative Example 2

Except that in the slurry preparation step, 20% by mass $CeO_2/ZrO_2$ powder (trade name: Z-3340, manufactured by DAIICHI KIGENSO KAGAKU KOGYO CO., LTD.) was added to and mixed with the aqueous solution prepared in the metal solution preparation step to prepare a slurry, a methane oxidation decomposition catalyst (catalyst support: 20% by mass $CeO_2/ZrO_2$, active metal: 1.0 part by mass Pd+1.0 part by mass Pt) of Comparative Example 2 was obtained in the same manner as in Example 1. The above-described 20% by mass $CeO_2/ZrO_2$ contains 20% by mass of Seria and 80% by mass of zirconia, and also only contains a tetragonal ceria-zirconia (t-$Ce_XZr_{1-X}O_2$) phase, as shown in the X-ray diffraction results in FIG. 1. That is, the 20% by mass $CeO_2/ZrO_2$ contains a ceria-zirconia composite oxide, and does not contain zirconia solely.

Comparative Example 3

Except that in the slurry preparation step, 70% by mass $CeO_2/ZrO_2$ powder (trade name: Z-3341, manufactured by DAIICHI KIGENSO KAGAKU KOGYO CO., LTD.) was added to and mixed with the aqueous solution prepared in the metal solution preparation step to prepare a slurry, a methane oxidation decomposition catalyst (catalyst support: 70% by mass $CeO_2/ZrO_2$, active metal: 1.0 part by mass Pd+1.0 part by mass Pt) of Comparative Example 3 was obtained in the same manner as in Example 1. The above-described 70% by mass $CeO_2/ZrO_2$ contains 70% by mass of Seria and 30% by mass of zirconia, and also only contains a tetragonal ceria-zirconia (t-$Ce_{XI}Zr_{1-X}O2$) phase, as shown in the X-ray diffraction results in FIG. 1. That is, the 70% by mass $CeO_2/ZrO_2$ contains a ceria-zirconia composite oxide, and does not contain zirconia solely.

Comparative Example 4

Except that in the slurry preparation step, 20% by mass $CeO_2/ZrO_2$ powder (trade name: Z-3340, manufactured by DAIICHI KIGENSO KAGAKU KOGYO CO., LTD.) was added to and mixed with the aqueous solution prepared in the metal solution preparation step to prepare a slurry, a methane oxidation decomposition catalyst (catalyst support: 20% by mass $CeO_2/ZrO_2$, active metal: 4.0 part by mass Pd+1.0 part by mass Pt) of Comparative Example 4 was obtained in the same manner as in Example 2.

Comparative Example 5

Except that in the slurry preparation step, 70% by mass $CeO_2/ZrO_2$ powder (trade name: Z-3341, manufactured by DAIICHI KIGENSO KAGAKU KOGYO CO., LTD.) was added to and mixed with the aqueous solution prepared in the metal solution preparation step to prepare a slurry, a methane oxidation decomposition catalyst (catalyst support: 70% by

mass $CeO_2/ZrO_2$, active metal: 4.0 part by mass Pd+1.0 part by mass Pt) of Comparative Example 5 was obtained in the same manner as in Example 2.

<Evaluations>

[Evaluations of X-ray Diffusion Patterns (Catalyst Support)]

The powder sample of the catalyst support ($ZrO_2$, 10% by mass $CeO_2/ZrO_2$, 20% by mass $CeO_2/ZrO_2$, and 70% by mass $CeO_2/ZrO_2$) used in each of Examples and/or Comparative Examples was analyzed in an X-ray diffraction (XRD) analysis in the same manner as described above to measure $2\theta$ at the peak top in the peak of the monoclinic zirconia (m-$ZrO_2$) phase and 20 at the peak top in the peak of the tetragonal ceria-zirconia composite oxide (t-$Ce_XZr_{1-X}O_2$) phase. The graph of the XRD patterns is shown in FIG. 1 to show 20 at the peak top in the peak of the monoclinic zirconia (m-$ZrO_2$) phase and 20 at the peak top in the peak of the tetragonal ceria-zirconia composite oxide (t-$Ce_XZr_{1-X}O_2$) phase in Table 1. The conditions were as follows.

{Measurement Conditions}

X-ray source: CuK$\alpha$ rays ($\lambda$=1.54815 Å, Ni filter, applied power: 40kV, 40mA)
Scan range: 5° to 90° (20 range)
Scan speed: 5.0°/min
Sampling range: 0.01°
Divergent slit: 0.20 mm
Divergence Longitudinal Restriction Slit: 2 mm
Scattering slit: 2°
Light receiving slit: 0.15 mm
Offset angle: 0°

The analysis software (PDXL 2 (Version 2.7.2.0) manufactured by Rigaku) was used for the analysis. The angle 20 of the peak of the monoclinic zirconia (m-$ZrO_2$) phase is the angle of the diffraction at the m-$ZrO_2$ (-111) plane calculated with the analysis software. The angle 20 of the peak of the tetragonal ceria-zirconia composite oxide (t-$Ce_XZr_{1-X}O_2$) phase is the angle of the diffraction at the t-$Ce_XZr_{1-X}O_2$ (101) plane calculated with the analysis software.

[Evaluations of X-ray Diffraction Patterns (Methane Oxidation Catalyst)]

The powder sample of the methane oxidation catalyst of each of Examples and Comparative Examples was analyzed in an X-ray diffraction (XRD) analysis to measure $2\theta$ ($\theta$ is a Bragg angle) at the peak top of the monoclinic zirconia (m-$ZrO_2$) phase, and 20 at the peak top of the tetragonal ceria-zirconia composite oxide (t-$Ce_XZr_{1-X}O_2$) phase. An X-ray diffractometer (UitimaIV, manufactured by Rigaku) and an X-ray detector (D/teX Ultra, manufactured by Rigaku) were used for the analysis to analyze the crystal structure by a Bragg-Brentano method. The graph of the XRD patterns is shown in FIG. 2 to show $2\theta$ at the peak top in the peak of the monoclinic zirconia (m-$ZrO_2$) phase and 20 at the peak top in the peak of the tetragonal ceria-zirconia composite oxide (t-$Ce_XZr_{1-X}O_2$) phase in Table 2. The devices, measurement conditions, analysis methods used for the measurement were the same as in the above-described evaluations of X-ray diffraction patterns.

[Evaluations of Methane Oxidation Catalyst Performance]

For the methane oxidation catalysts of each of Examples and Comparative Examples, a methane oxidation test was carried out to obtain methane oxidation rates at 350°C, 375°C, and 400°C as catalyst performances.
Specifically, first, a methane oxidation test was carried out for each temperature of 6 points (in 30°C to 40°C increments) selected from the range of 290°C to 460°C, to measure the methane oxidation rates.
In the methane oxidation test, first, a fixed-bed reactor is filled with a methane oxidation catalyst (mass: 1.0 g, volume: 1.1 mL), and the reactor filled with the methane oxidation catalyst was placed in the middle of a flow path of a test gas as a methane-containing gas. Then, after the test gas was heated to a predetermined temperature (a temperature of the above-described 6 points), the gas was supplied from the reactor feed port to the reactor. The composition of the test gas is shown below (the methane ($CH_4$) concentration at the reactor feed port is the methane concentration before the contact with the methane oxidation catalyst). Furthermore, as other conditions, the temperature in the reactor was 400°C, the flow rate of the test gas was 1.09NL/min, and the gas hourly space velocity of the test gas (GHSV) was 59, 454 h$^{-1}$. The gas hourly space velocity is calculated by dividing the flow rate of the test gas (Nm$^3$/h) by the catalyst volume (m$^3$). The methane concentration of the test gas after the test gas passed through the fixed bed reactor and brought into contact with the methane oxidation catalyst under the above-described conditions (the methane concentration at the reactor discharge port) was measured. For the quantitative determination of the methane concentration, a gas chromatography system with a thermal conductivity detector (TCD) (GC-8A, manufactured by Shimadzu Corporation) was used. The measurement conditions are shown below. Then, the methane oxidation rate represented by the following formula was determined from the methane concentration at the reactor feed port and the methane concentration at the reactor discharge port.

{Test Gas Composition}

CH$_4$ Concentration: 1000 ppmv-dry (Methane Concentration at the Reactor Feed Port)
O$_2$ Concentration: 12 Volume%-wet
H$_2$O content: 8% by volume
N$_2$ Concentration: Balance

{Measurement Conditions of Gas Chromatography System with TCD}

Column: Dual-packed column "Shincarbon-ST 50/80 mesh" (manufactured by Shinwa Chemical Industries Ltd.) 2.0 m × 3
Carrier Gas: He gas (flow rate 50NmL/min)
Column temperature: 180°C
Detector temperature: 140°C

Methane oxidation rate (%) = (Methane concentration at the reactor feed port-Methane concentration at the reactor discharge port)/(Methane concentration at the reactor feed port) × 100

Then, by substituting the methane oxide rate calculated according to the above-described formula into the following formula (1) below, the reaction rate constants k (h$^{-1}$) in the methane oxidation reactions at the temperatures at the above-described 6 points were obtained. The GHSV in the formula (1) is the above-described gas hourly space velocity. As described above, the rate constants k (h$^{-1}$) at the above-described 6 points were obtained.

$$k = -\text{GHSV} \times \ln(1\text{-methane oxidation rate } (\%)/100) \quad (1)$$

Then, based on the reaction rate constants k at the temperatures of the above-described 6 points, the Arrhenius equation relating to the methane oxidation reaction in the case of using the methane oxidation catalyst of each of Examples and Comparative Examples was identified by the Arrhenius plot method to obtain the reaction rate constants k (h$^{-1}$) at 350°C in the same formula. The results are shown in Table 2.

Furthermore, using the Arrhenius equation relating to the methane oxidation reaction in the case of using the methane oxidation catalyst of each of Examples and Comparative Examples calculated above, the reaction rate constants k (h$^{-1}$) at 375°C and 400 °C were also determined, and by using the reaction rate constants k (h$^{-1}$) at 350°C, 375°C, and 400°C and the above-described formula (1), the methane oxide rates (%) at 350°C, 375°C and 400°C were obtained. The results are shown in Table 3.

[Table 1]

Table 1

| Catalyst support | | Peak position(2$\theta$) | |
|---|---|---|---|
| | | m-ZrO$_2$ (deg.) | t-Ce$_X$Zr$_{1-X}$O$_2$ (deg.) |
| m-ZrO$_2$ | (Comp. Ex. 1) | 28.17 | - |
| 10 % by mass CeO$_2$/ZrO$_2$ | (Ex. 1, 2) | 28.07 | 30.07 |

(continued)

| Catalyst support | | Peak position($2\theta$) | |
|---|---|---|---|
| | | m-ZrO$_2$ (deg.) | t-Ce$_X$Zr$_{1-X}$O$_2$ (deg.) |
| 20 % by mass CeO$_2$/ZrO$_2$ | (Comp.Ex. 2, 4) | - | 29.94 |
| 70 % by mass CeO$_2$/ZrO$_2$ | (Comp.Ex. 3, 5) | - | 29.05 |

[Table 2]

Table 2

| No. | Methane oxidation catalyst | | Peak position ($2\theta$) | | Reaction rate constant k (h$^{-1}$) at 350°C |
|---|---|---|---|---|---|
| | Active metal | Catalyst support | m-ZrO$_2$ (deg.) | t-Ce$_X$Zr$_{1-X}$O$_2$ (deg.) | |
| Ex. 1 | 1.0 Part by mass Pd· 1.0 Part by mass Pt | 10 % by mass CeO2/ZrO2 | 28.08 | 30.08 | 13266 |
| Comp. Ex. 1 | 1.0 Part by mass Pd· 1.0 Part by mass Pt | m-ZrO$_2$ | 28.17 | - | 1627 |
| Comp. Ex. 2 | 1.0 Part by mass Pd· 1.0 Part by mass Pt | 20 % by mass CeO2/ZrO2 | - | 29.95 | 5087 |
| Comp. Ex. 3 | 1.0 Part by mass Pd· 1.0 Part by mass Pt | 70 % by mass CeO2/ZrO2 | - | 29.09 | 7600 |
| Ex. 2 | 4.0 Parts by mass Pd· 1.0 Part by mass Pt | 10 % by mass CeO2/ZrO2 | 28.06 | 30.06 | 73597 |
| Comp. Ex. 4 | 4.0 Parts by mass Pd· 1.0 Part by mass Pt | 20 % by mass CeO2/ZrO2 | - | 29.92 | 55982 |
| Comp. Ex. 5 | 4.0 Parts by mass Pd· 1.0 Part by mass Pt | 70 % by mass CeO2/ZrO2 | - | 29.04 | 48811 |

[Table 3]

Table 3

| No. | Methane oxidation catalyst | | Methane decomposition rate at 350°C (%) | Methane decomposition rate at 375°C (%) | Methane decomposition rate at 400°C (%) |
|---|---|---|---|---|---|
| | Active metal | Catalyst support | | | |
| Ex. 1 | 1.0 Part by mass Pd· 1.0 Part by mass Pt | 10 % by mass CeO$_2$/ZrO$_2$ | 20 | 42 | 70 |
| Comp. Ex. 1 | 1.0 Part by mass Pd· 1.0 Part by mass Pt | m-ZrO$_2$ | 2.7 | 6.1 | 13 |
| Comp. Ex. 2 | 1.0 Part by mass Pd: 1.0 Part by mass Pt | 20 % by mass CeO/ZrO$_2$ | 8.2 | 18 | 37 |
| Comp. Ex. 3 | 1.0 Part by mass Pd· 1.0 Part by mass Pt | 70 % by mass CeO$_2$/ZrO$_2$ | 12 | 27 | 50 |

(continued)

| No. | Methane oxidation catalyst | | Methane decomposition rate at 350°C (%) | Methane decomposition rate at 375°C (%) | Methane decomposition rate at 400°C (%) |
|---|---|---|---|---|---|
| | Active metal | Catalyst support | | | |
| Ex. 2 | 4.0 Parts by mass Pd. 1.0 Part by mass Pt | 10 % by mass $CeO_2/ZrO_2$ | 71 | 95 | 99 |
| Comp. Ex. 4 | 4.0 Parts by mass Pd· 1.0 Part by mass Pt | 20 % by mass $CeO_2/ZrO_2$ | 61 | 86 | 98 |
| Comp. Ex. 5 | 4.0 Parts by mass Pd· 1.0 Part by mass Pt | 70 % by mass $CeO_2/ZrO_2$ | 56 | 83 | 97 |

<Consideration>

As shown in FIGS. 1 and 2, the methane oxidation catalysts and their catalyst supports (10% by mass $CeO_2/ZrO_2$) of Examples 1 and 2 had both the peak of the monoclinic zirconia (m-$ZrO_2$) phase, and the peak of the tetragonal ceria-zirconia composite oxide (t-$Ce_xZr_{1-x}O_2$) phase. In other words, it was suggested that in the catalyst supports of the methane oxidation catalysts of Examples 1 and 2, a part of zirconia formed a tetragonal ceria-zirconia composite oxide while the rest of the zirconia formed monoclinic zirconia solely.

On the other hand, as shown in FIGS. 1 and 2, the methane oxidation catalyst and its catalyst support ($ZrO_2$) of Comparative Example 1 had only the peak of a monoclinic zirconia (m-$ZrO_2$) phase. In other words, in the methane oxidation catalyst of Comparative Example 1, the catalyst support did not have a tetragonal ceria-zirconia composite oxide.

Furthermore, as shown in FIGS. 1 and 2, the methane oxidation catalysts and their catalyst supports (20% by mass $CeO_2/ZrO_2$ and 70% by mass $CeO_2/ZrO_2$) of Comparative Example 2 to 5 had only the peak of the tetragonal ceria-zirconia composite oxide (t-$Ce_xZr_{1-x}O_2$) phase. In other words, it was suggested that in the methane oxidation catalysts of Comparative Examples 2 to 5, the catalyst support formed a tetragonal ceria-zirconia composite oxide, but did not form monoclinic zirconia solely. The methane oxidation catalysts of Comparative Examples 2 and 4 (using 20% by mass $CeO_2/ZrO_2$ as a catalyst support) had the peak position of the tetragonal ceria-zirconia composite oxide (t-$Ce_xZr_{1-x}O_2$) near $2\theta = 30°$, it was found that the crystal state of t-$ZrO_2$ strongly appeared. In contrast, the methane oxidation catalysts of Comparative Examples 3 and 5 (using 70% by mass $CeO_2/ZrO_2$ as a catalyst support) had the peak position of the tetragonal ceria-zirconia composite oxide (t-$Ce_xZr_{1-x}O_2$) phase near $2\theta$ = around 29°, it was found that the crystal state of c-$CeO_2$ strongly appeared as compared with Comparative examples 2 and 4.

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

Industrial Applicability

The methane oxidation catalyst and the method of oxidizing methane of the present invention can be used for removing unburned methane contained in an exhaust gas as a methane-containing gas emitted from an LNG fuel vessel, and can also be used for removing methane contained in a methane-containing gas produced in a process such as a gas phase reaction in a chemical plant. Furthermore, the method of producing a methane oxidation catalyst of the present invention can efficiently produce the methane oxidation catalyst used for the above-described purposes.

**Claims**

1.  A methane oxidation catalyst for oxidizing methane, comprising:

    a catalyst support containing a ceria-zirconia composite oxide; and
    an active metal supported on the catalyst support and containing Pd and Pt,

    wherein a content ratio of ceria in the catalyst support is 5% by mass or more and less than 15% by mass.

2.  The methane oxidation catalyst according to claim 1, wherein a content ratio of the Pd in the active metal is 50% by mass or more.

3. The methane oxidation catalyst according to claim 1, wherein a blending amount of the active metal with respect to 100 parts by mass of the catalyst support is 5 parts by mass or less.

4. The methane oxidation catalyst according to claim 1,

   wherein the catalyst support further contains zirconia,
   wherein the zirconia contains a monoclinic zirconia phase, and
   wherein the ceria-zirconia composite oxide contains a tetragonal ceria-zirconia phase.

5. A method of producing a methane oxidation catalyst, the method comprising:

   a first step of mixing a catalyst support raw material containing a ceria-zirconia composite oxide with a solution of an active metal containing Pd and Pt to prepare a slurry;
   a second step of drying the slurry to obtain a powder; and
   a third step of calcining the powder at 400° C or more and 600°C or less to obtain a methane oxidation catalyst according to any one of claims 1 to 4,

   wherein in the first step, a content ratio of ceria in the catalyst support raw material is 5% by mass or more and less than 15% by mass.

6. A method of oxidizing methane, the method comprising:
   an oxidation step of bringing methane into contact with a methane oxidation catalyst according to any one of claims 1 to 4 to oxidize the methane,
   wherein in the oxidation step, an oxidation temperature is 450°C or less.

FIG 1

FIG. 2

**EP 4 703 035 A1**

## INTERNATIONAL SEARCH REPORT

| International application No. |
|---|
| **PCT/JP2024/015274** |

| A. | CLASSIFICATION OF SUBJECT MATTER |
|---|---|

*B01J 23/63*(2006.01)i; *B01D 53/94*(2006.01)i; *B01J 37/04*(2006.01)i; *B01J 37/08*(2006.01)i
FI:    B01J23/63 A; B01J37/04 102; B01D53/94 280; B01J37/08 ZAB

According to International Patent Classification (IPC) or to both national classification and IPC

| B. | FIELDS SEARCHED |
|---|---|

Minimum documentation searched (classification system followed by classification symbols)

B01J23/63; B01D53/94; B01J37/04; B01J37/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2-43951 A (NIPPON SHOKUBAI KAGAKU KOGYO CO., LTD.) 14 February 1990 (1990-02-14)<br>claims, p. 4, lower right column, 3rd line from the bottom to p. 5, upper left column, line 10, p. 5, upper right column, line 6, p. 10, upper right column, examples 10, 11, lower left column, 3rd paragraph | 1-6 |
| Y | JP 2006-181569 A (OSAKA GAS CO., LTD.) 13 July 2006 (2006-07-13)<br>paragraph [0005] | 1-6 |
| Y | JP 2007-90331 A (OSAKA GAS CO., LTD.) 12 April 2007 (2007-04-12)<br>paragraph [0009] | 1-6 |
| Y | WO 2022/047134 A1 (BASF CORPORATION) 03 March 2022 (2022-03-03)<br>p. 28, line 20 to p. 29, line 8 | 2 |
| A | JP 2004-148173 A (KABUSHIKI KAISHA TOYOTA CHUO KENKYUSHO) 27 May 2004 (2004-05-27)<br>entire text | 1-6 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

17

**EP 4 703 035 A1**

**INTERNATIONAL SEARCH REPORT**

| | International application No. |
|---|---|
| | **PCT/JP2024/015274** |

---

**C.      DOCUMENTS CONSIDERED TO BE RELEVANT**

| Category* | Citation of document, with indication, where appropriate, of the relevant passages | Relevant to claim No. |
|---|---|---|
| A | JP 2016-165707 A (OSAKA GAS CO., LTD.) 15 September 2016 (2016-09-15)<br>entire text | 1-6 |
| A | JP 2014-100614 A (MITSUI MINING & SMELTING CO., LTD.) 05 June 2014 (2014-06-05)<br>entire text | 1-6 |

Form PCT/ISA/210 (second sheet) (July 2022)

## INTERNATIONAL SEARCH REPORT
### Information on patent family members

International application No.

**PCT/JP2024/015274**

| Patent document cited in search report | | | Publication date (day/month/year) | Patent family member(s) | | | Publication date (day/month/year) |
|---|---|---|---|---|---|---|---|
| JP | 2-43951 | A | 14 February 1990 | EP | 337809 | A2 | |
| | | | | claims, p. 3, 4th line from the bottom, line 4 to p. 4, line 14, p. 9, example 10, p. 12, lines 24-29 | | | |
| | | | | US | 5015617 | A | |
| JP | 2006-181569 | A | 13 July 2006 | (Family: none) | | | |
| JP | 2007-90331 | A | 12 April 2007 | (Family: none) | | | |
| WO | 2022/047134 | A1 | 03 March 2022 | US | 2023/0321636 | A1 | |
| | | | | paragraph [0126] | | | |
| | | | | EP | 4204142 | A1 | |
| JP | 2004-148173 | A | 27 May 2004 | (Family: none) | | | |
| JP | 2016-165707 | A | 15 September 2016 | (Family: none) | | | |
| JP | 2014-100614 | A | 05 June 2014 | US | 2015/0224471 | A1 | |
| | | | | entire text | | | |
| | | | | EP | 2921226 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005270882 A
- WO 5909436 A
- WO 6228727 A